# EUROPEAN PATENT APPLICATION

(11) **EP 4 603 845 A1**
(43) Date of publication of application: **20.08.2025**
(21) Application number: 25158599.8
(22) Date of filing: 18.02.2025
(51) Int. Cl.: G01N 35/04

(54) **CONTAINER HANDLING DEVICE**

(30) Priority: 19.02.2024 LU 103248
(71) Applicant: Stratec SE, 75217 Birkenfeld (DE)
(72) Inventor: Dittus, Jenny, 75217 Birkenfeld (DE); Metz, Christoph, 75217 Birkenfeld (DE); Trump, Martin, 75217 Birkenfeld (DE)
(74) Representative: Tegethoff, Sebastian

(57) **Abstract**

The present invention provides a slider for loading identical types of containers in an intended orientation as a stack of containers, wherein the slider separates a loading area from a processing area, and wherein the slider comprises on its upper surface a detector comprising a plurality of detector elements. Another object of the disclosure is a device for loading identical types of containers in an intended orientation as a stack of containers, comprising a loading area for receiving the stack of containers; a receiver which is arranged below the loading area for receiving the stack of containers; the slider which is arranged between the loading area for receiving the stack of container and a processing area, wherein the slider comprises on its upper surface a detector comprising a plurality of detector elements. Another object of the present disclosure relates to a system for loading identical types of containers in an intended orientation as a stack of containers, comprising the device; different types of containers configured for fitting in the loading area of the device, wherein each container type is configured to have different contact pints with the upper surface of the slider depending on its orientation of loading into the compartment. A method for detecting the type and orientation of a container which is to be dispensed is also disclosed.

## Description

### Field of the Disclosure

The present disclosure relates to a device, the use of the device in automated analyser systems and a method for the handling of containers like cuvettes.

### Brief description of the related art

Automated analyser systems for use in clinical diagnostics and life sciences are produced by a number of companies. For example, STRATEC^{®} SE, Birkenfeld, Germany, produces a number of devices for specimen handling and detection for use in automated analyser systems and other laboratory instrumentation.

Devices for the handling of container are known. For example, published International application WO 2008/097892 A2 discloses stackable cuvettes and a cuvette dispenser. Release members rotate to release cuvettes from cuvette stacks. Published U.S. patent application US 2007/0253866 A1 discloses cuvettes which can be arranged in plates, not in stacks, and an analytical device using these cuvettes. Published European patent application EP 0 806 672 A3 teaches multiple vertically oriented cuvettes and a device for releasing the bottom cuvette. And published International patent application WO 96/11866 A2 discloses a vertical row of cuvettes and a device for releasing the bottom cuvette. Once released, the bottom cuvette changes orientation.

Published European patent application EP 0 710 840 A1 discloses a conveyor and a method of providing a reaction cuvette using a conveyor, wherein a sensor is included to sense whether more than one cuvette is being conveyed. Because the cuvettes are received from a stack, one at a time, the sensor determines if two stacked cuvettes are present on the conveyor instead of one, by sensing the presence or absence of a cuvette projecting above the top of the desired cuvette.

Published U.S. patent US 4,260,581 B2 discloses an automatic analysis apparatus which makes use of an exhaustive type reaction vessel, comprising a movable reaction line provided along its overall length with an engage portion operative to be engaged with the reaction vessel, a reaction vessel supply station, a reaction liquid measuring station and a reaction vessel discarding station, all of the stations being arranged along the reaction line in the order as mentioned above.

Published European patent application EP 2 799 886 A1 discloses a device for storing and dispensing cuvettes from a stack. The device has at least one cuvette stack receiving compartment, which may be a tube open at both ends, wherein one of the openings is provided with retaining springs, partly blocking the opening, so that the cuvette stack having been dropped into the compartment may come to rest on the retaining springs. The retaining springs are being spaced apart from the opening of the compartment by a distance that allows at least two cuvettes in the stack to stick out of the compartment opening. Furthermore, a cuvette separator with retaining spring spreaders is provided, moveable between a standby position away from the compartment and a cuvette separation position across the retaining spring opening of the compartment, and in between the two cuvettes, sticking out of the compartment.

Published U.S. patent application US 2021/122584 A1 discloses a conveyance system and method for conveying a plurality of object carriers. The conveyance system comprises at least one first conveyor lane section, and at least two second conveyor lane sections. The conveyance system further comprises a rotatable diverting element for diverting an object carrier of the plurality of object carriers between the at least one first conveyor lane section and one of the at least two second conveyor lane sections of the conveyance system. The diverting element comprises at least one sensor element for detecting the object carrier when the object carrier is: being conveyed toward the diverting element, or contacting the diverting element, or being transported away from the diverting element by the conveyance system, The conveyance system further comprises an axis of rotation adjacent to the first conveyor lane section and one of the second conveyor lane sections. The axis of rotation may be between two conveyor lanes, one of which includes the first conveyor lane section and the other of which includes one of the second conveyor lane sections. The axis of rotation is perpendicular to a direction of conveyance of the first conveyor lane section and/or the two second conveyor lane sections. The disadvantage of the system according to this document is that it is not able to detect different kinds of object carriers.

Published U.S. patent US 5,567,387 A discloses a conveyor and a method of providing a reaction cuvette using a conveyor, wherein a sensor is included to sense whether more than one cuvette is being conveyed. Because the cuvettes are received from a stack, one at a time, the sensor determines if two stacked cuvettes are present on the conveyor instead of one, by sensing the presence or absence of a cuvette projecting above the top of the desired cuvette. The disadvantage of the system according to this document is that it is not able to detect different kinds of object carriers.

The devices and systems which are known from the prior art are not intended for use with different containers, because they lack means for detecting a container type. Thus, there is a need for improved devices and methods for handling container in medical analysis systems, which are able to detect or distinguish container types and an unintended orientation of containers.

### Summary of the Disclosure

The present invention provides a slider for loading identical types of containers in an intended orientation as a stack of containers, wherein the slider separates a loading area from a processing area, and wherein the slider comprises on its upper surface a detector comprising a plurality of detector elements, wherein the plurality of detector elements comprises groups of detector elements configured for detecting different patterns of contact points of a container with the upper surface of the slider allowing to identify the kind of container contacting the upper surface of the slider.

It is further envisaged that the plurality of detector elements comprises capacitive electrodes.

In an embodiment, the slider of the present disclosure is movably arranged between the loading aera and the processing area.

Another object of the present disclosure relates to a device for loading identical types of containers in an intended orientation as a stack of containers, comprising a loading area for receiving the stack of containers; a receiver which is arranged below the loading area for receiving the stack of containers; a slider which is arranged between the loading area for receiving the stack of container and a processing area, wherein the slider comprises on its upper surface a detector comprising a plurality of detector elements.

The plurality of detector elements of a device according to the present disclosure comprises in an embodiment groups of detector elements for detecting different patterns of contact points of a container with the upper surface of the slider.

It is further intended that the plurality of detector elements comprises capacitive electrodes.

The device comprises in an embodiment a slider which is movably arranged between loading area and processing area.

Another embodiment relates to a device comprising a loading area which is open at both ends.

Another object of the present disclosure relates to a system for loading identical types of containers in an intended orientation as a stack of containers, comprising a device as described above; different types of containers configured for fitting in the loading area of the device, wherein each container type is configured to have different contact pints with the upper surface of the slider depending on its orientation of loading into the compartment.

The types of containers of the system are selected from the group comprising cuvettes, miniplates and covers for cuvettes and miniplates.

It is further envisaged that all types of containers are identically formed on their upper side so that they have identical contact points with the upper surface of the slider when loaded upside down.

Another object of the present disclosure relates to a method for detecting the type and orientation of a container which is to be dispensed, comprising the steps of:
- loading the container into a loading area;
- arranging the loading area above an upper surface of a slider which is arranged above a processing area;
- detecting contact points of the container with the upper surface of the slider with a detector comprising a plurality of detector elements on the upper surface of the slider.
- detecting the type and orientation of the container by identifying a pattern of contact points of the container with the upper surface of the slider.

In an embodiment of the method according to the present disclosure, capacitive electrodes are used as detector elements for detecting the pattern of contact points.

It is also envisaged that the plurality of detector elements comprises groups of detectors, wherein each group of detector elements detects a specific pattern of contact points of a container with the slider.

It is also intended that a group of detector elements comprises a single detector element or a plurality of detector elements.

The foregoing summary is not intended to summarize each potential embodiment or every aspect of the present disclosure.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 shows schematically an arrangement of four different electrodes on the upper surface of a slider.
FIG. 2 shows a tunnel or compartment for receiving a stack of containers arranged above a slider according to the present disclosure.
FIG. 3 shows a slider which is opening for releasing the stack of containers.
FIG. 4 shows an open slider and the stack of containers placed in the receiver of a carousel.
FIG. 5 shows a stack of containers in contact with the upper surface of the slider, wherein the stack of containers is loaded upside down.
FIG. 6 shows a stack of correctly loaded miniplate in a compartment in contact with the upper surface pf the slider.
FIG. 7 shows a side of a stack of correctly loaded miniplate in a compartment in contact with the upper surface pf the slider.
FIG. 8 shows a slider in the process of opening.
FIG. 9 shows an open slider directly before the stack of miniplates falls downwards.
FIG. 10 shows the miniplates passing the open slider.
FIG. 11 shows an example of a stack of miniplates which is loaded upside down.
FIG. 12 shows a stack of correctly loaded cover or lids.
FIG. 13 shows a sectional view through a stack of correctly orientated covers or lids.
FIG. 14 shows an exemplary printed circuit board comprising the detector array shown in FIG. 1.
FIG. 15 shows schematically an alternative approach for detecting the orientation of containers and cover.

### Detailed Description of the Disclosure and the Figures

The technical problem is solved by the independent claims. The dependent claims cover further specific embodiments of the invention.

The term container relates to any vessel configured for receiving a fluid like a cuvette. A fluid within the meaning of the present disclosure shall designate a liquid, gas, solid, mixture thereof, or any other material that flows under external force or shear stress.

The invention relates to the possibility of loading three different types of containers using the same loading interface which can be formed as a loading tower. In this case it is necessary to be able to detect the respective container type directly after loading and directly before taking a container from a stack. In addition, a sensor system also detects container stacks loaded the wrong way round.

The detector of a device according to the present disclosure is able to detect different container types, comprising cuvettes, miniplates like 4-fold cuvettes, and lids or cover for the miniplates. In addition, the device is able to detect an unintended orientation of containers within the meaning that an upper side of a container is upwardly arranged.

A surrounding collar on top of a container and snap-features, are both identical for all types of container which are used in the system according to the present disclosure. This is the basis allowing to load mixed stacks of different container types using the same loading tower and for using the same destacker for the different types of container and cover.

When unstacking, however, it must be ensured that the container holder, which accommodates the unstacked part and is located below the loading tower, matches the loaded container.

A device according to the present disclosure comprises two loading towers, wherein one loading tower may be configured for cuvettes and the other loading tower is configured for the miniplates and lids or covers. In principle, however, it would also be conceivable for all different consumables to be loaded using just one loading tower.

A device according to the present disclosure comprises a slider with an array of a plurality of capacitive measuring surfaces. The different container types will each have different contact points with the slider so that they will not only be able to distinguish different containers type from another but also whether a container is loaded upside down. Recognising the type of container and its correct orientation enables the device to release only the opening of the slider if the right container type in the correct orientation has been loaded and detected.

The capacitive electrodes of the slider detect a container resting on the upper surface of the slider where the sensor array is arranged via a change in the detected capacitance. As mentioned, the containers have different contact points with the slider. For this reason, the capacitive sensor system comprises a plurality of different electrodes.

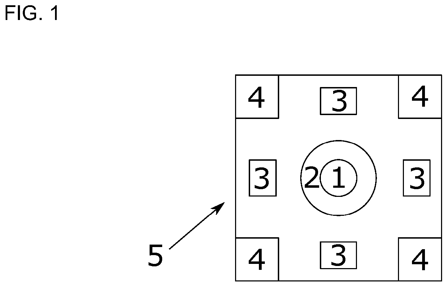

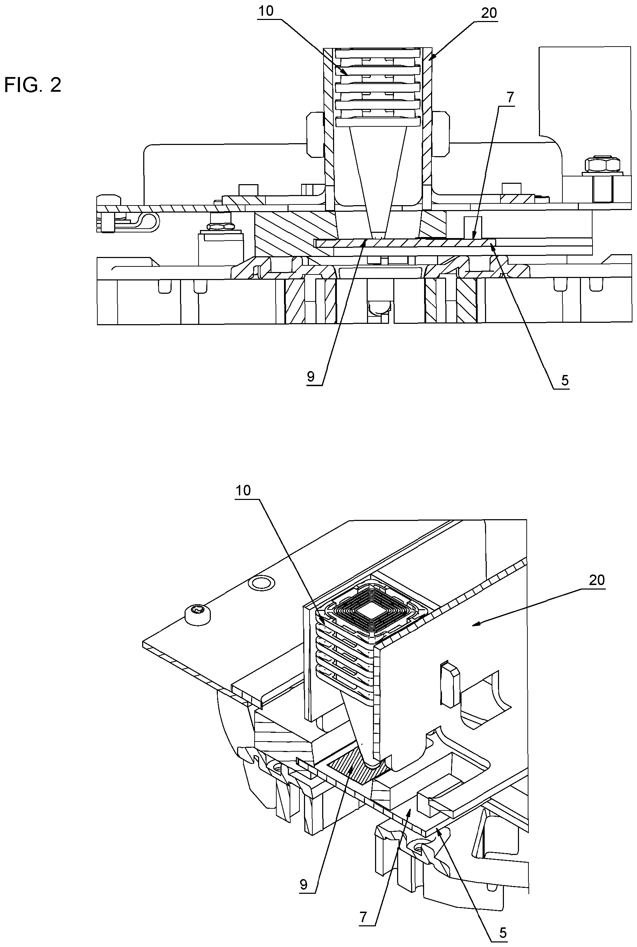

FIG. 1 shows schematically an arrangement of four different detectors 1, 2, 3, 4 which can be electrodes on the upper surface of a slider 5. Container like cuvettes 10 in the correct orientation will only get in contact with detector 1, which is in this case a single detector. Thus, if only detector 1 is activated, the cuvettes 10 are correctly inserted in the tunnel 20 (comp. FIG. 2). The plurality of detectors are arranged in an detector filed 9 which corresponds to the upper surface 7 of the slider 5 which is arranged below tunnel 20. A detector may be formed by a single detector like an electrode, or a detector may comprise a group of detectors which are arranged in a specific pattern in the detector filed 9.

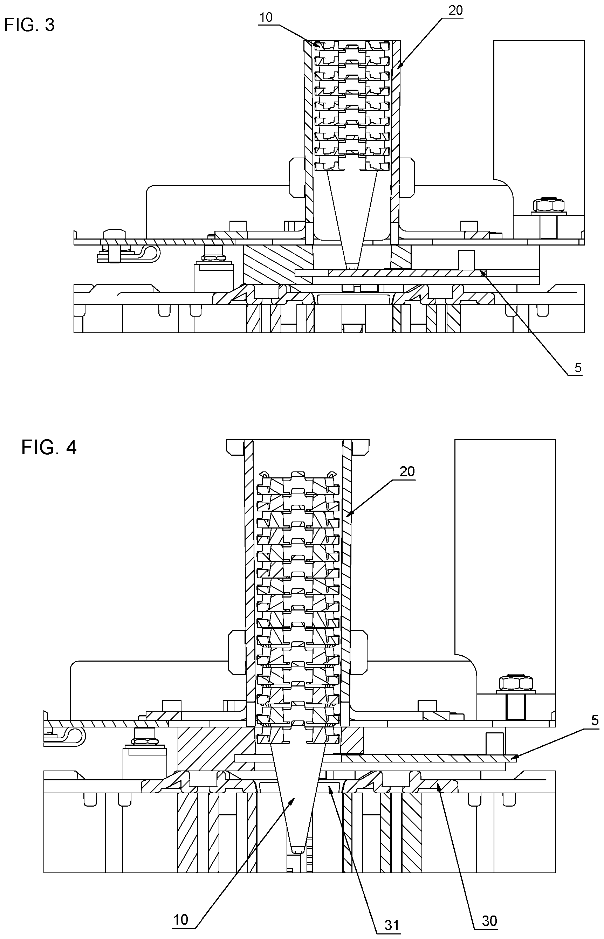

The slider 5 can be opened so that the cuvettes enter the automated analyser system (comp. FIG. 3 and FIG. 4). A cuvette is thus placed into a recess 31 of carousel 30.

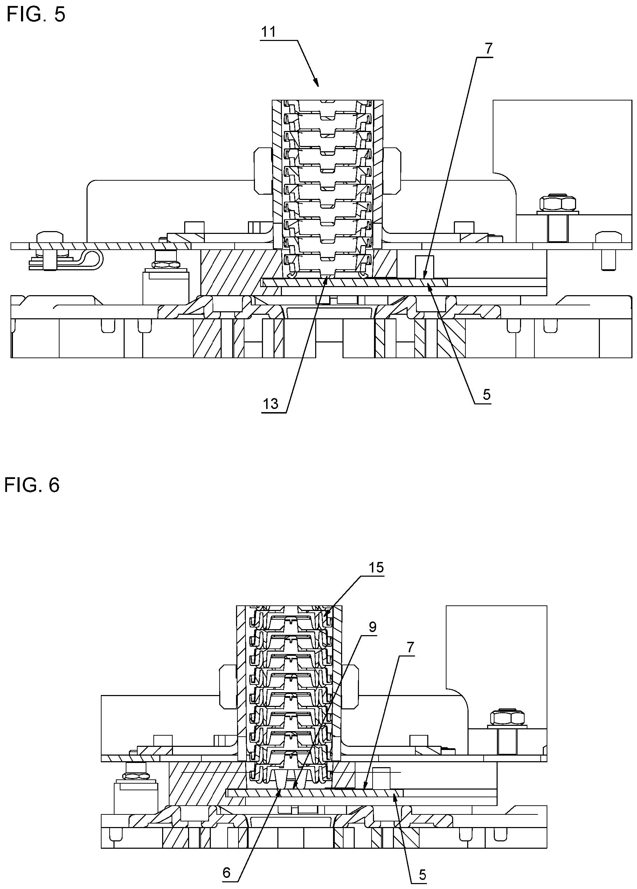

FIG. 5 shows an example with a stack of cuvettes 11 which are loaded upside down. The contact points of a cuvettes with the upper surface 7 of the slider 5 are the snap-features 13. Detectors 3 will be activated instead of detector 1 (comp. FIG. 1) so that the wrong orientation of the cuvettes will be identified.

FIG. 6 shows correctly loaded miniplates 15 which will contact detector field 9 of the upper surface 7 of the slider 5 with four contact points 6 which will be detected by detectors 2 (not visible), and lids will be detected by electrodes 4 (not shown).

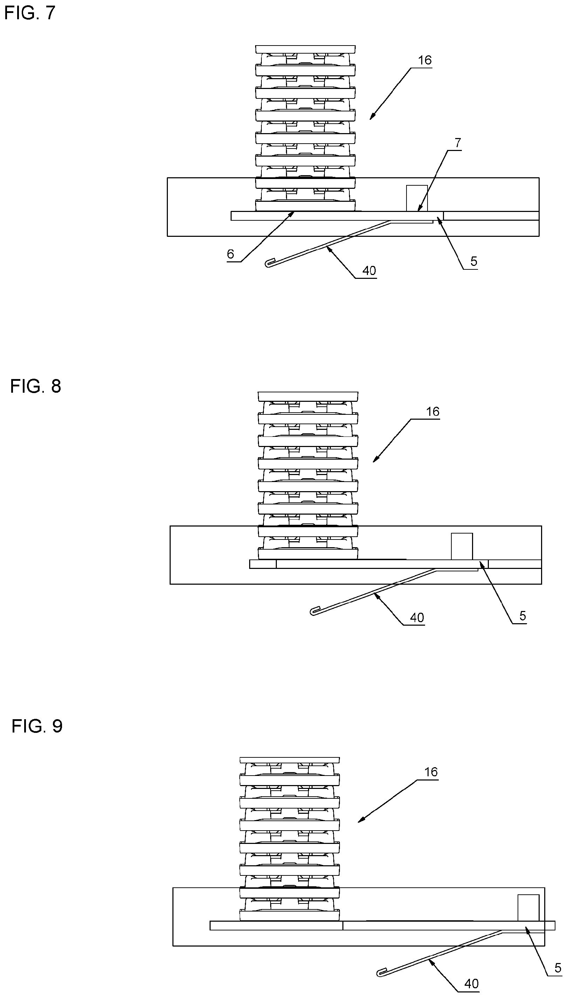

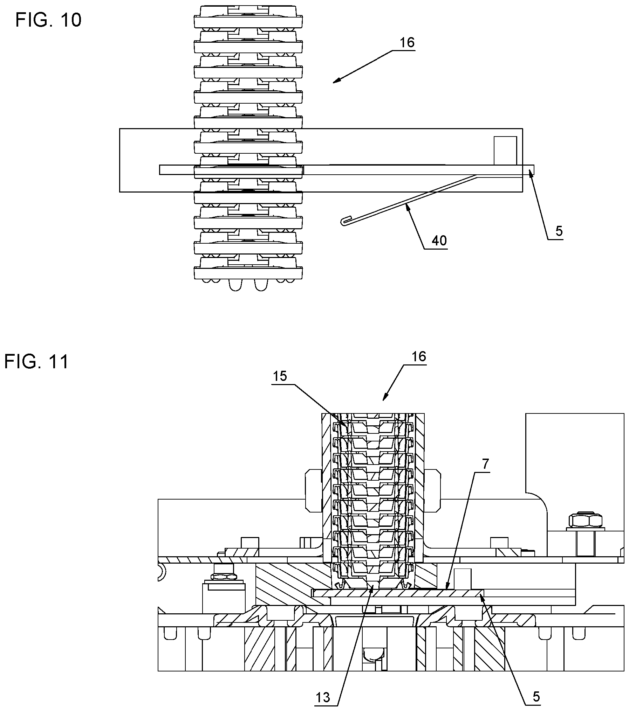

FIG. 7 shows a side view of a correctly loaded stack of miniplates 16 with slider 5 and operating lever 40 for moving the slider 5. Two of the four contact points 6 of the lowest miniplate 15 with the upper surface 7 of the slider 5 can be seen. The operating lever 40 is actuated by the carousel (not shown) which transports the container or miniplates. When an empty space for a miniplate is available below the slider and the correct orientation of the miniplates was detected, the slider is moved to one side by the operating lever (comp. FIG. 8 and FIG. 9) so that the stack of miniplates 16 moves downwards (comp. FIG. 10).

FIG. 11 shows an example of a stack of miniplates 16 which is loaded upside down. The four snap-features 13 (one is visible) of the miniplates 15 will contact the upper surface 7 of the slider 5 which is detected by detectors 3 (not visible). The slider will not open in this situation and the device will inform about the wrongly loaded stack of miniplates 16.

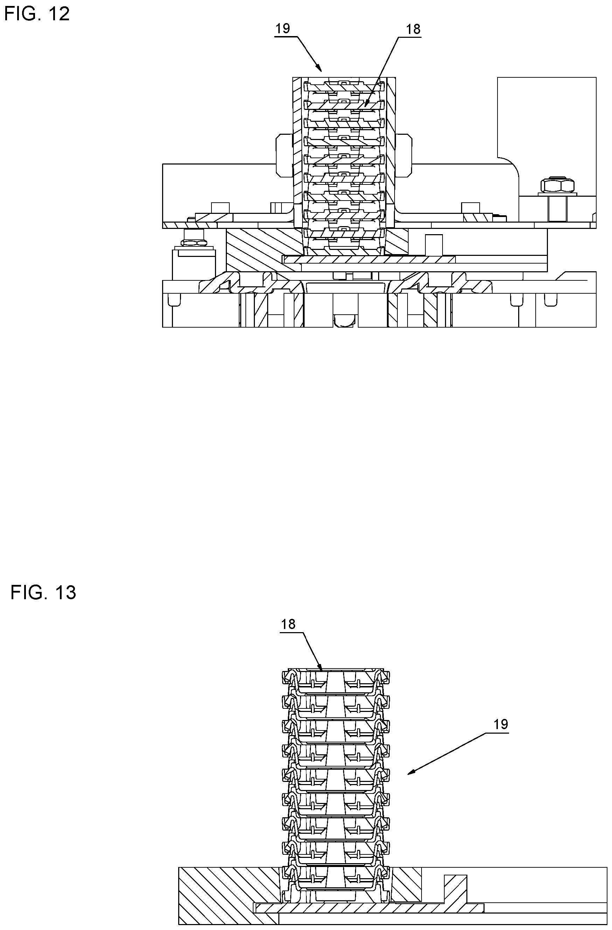

FIG. 12 shows a stack 19 of correctly loaded cover 18 or lids. The correct orientation will be detected by detectors 3 in the four corners (not visible) which will be touched by the surrounding collar 22.

FIG. 13 shows a sectional view through a stack of correctly orientated covers or lids.

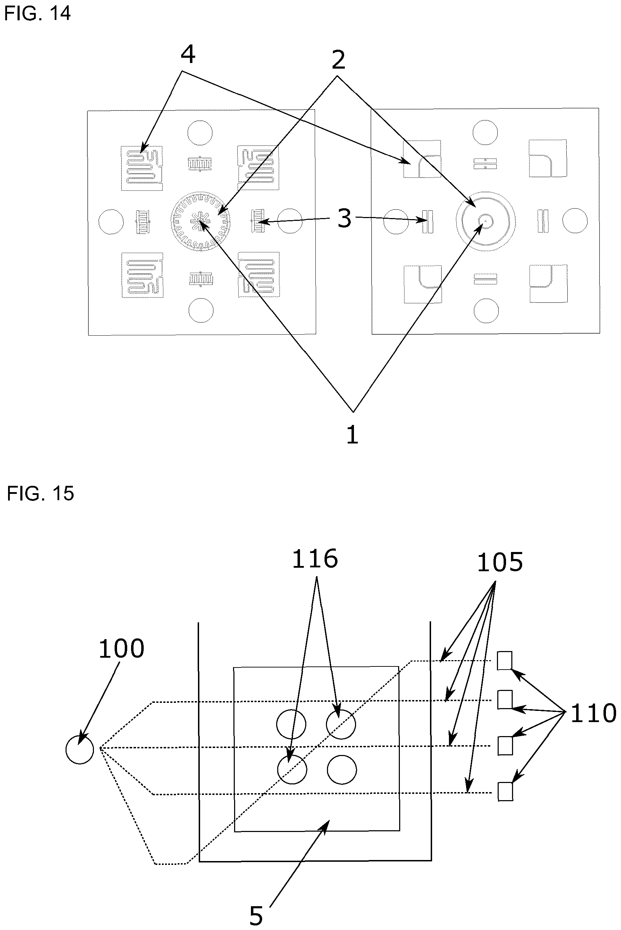

FIG. 14 shows exemplary two alternative printed circuit boards with different electrode with the same number of electrodes and their position relating to the detector array shown in FIG. 1. It is intended to use capacitive detectors for identifying the contact points of a stack of containers or covers with the upper surface of the slider. The slider with the upper surface equipped with the detector array represents the essential element of a device or system according to the present disclosure.

It is to be noted that the arrangement of the detectors of the detector array can be adjusted to the respective needs, i.e. the contact points of containers or covers with a surface like the upper surface of the slider.

**Table 1 summarises the possible results from the electrodes.**

| **Container** | **Orientation** | **Electrode 1** | **Electrode 2** | **Electrode 3** | **Electrode 4** |
|---|---|---|---|---|---|
| cuvette | correct | x | | | |
| | wrong | | | x | |
| miniplate | correct | | x | | |
| | wrong | | | x | |
| cover | correct | | | | x |
| | wrong | | | x | |

FIG. 15 shows schematically an alternative approach for detecting the orientation of containers and cover. The alternative approach is based on optical differentiation of the consumables using four light barriers. They can be realized either with four light sources and four receivers, or as shown in FIG. 15 with one light source and four receivers. The picture also shows (optional) optical fibres for a better adaptation of the sensor system to the mechanical conditions.

FIG. 15 shows a light source 100 which emits a light beam into optical fibres 105. The optical fibres 105 end directly before one side of the slider 5. On the respective opposite side of the slider is an optical fibre 105 in the direction of the light beam arranged so that the light beam can be guided by the optical fibres to detectors 110. The light beams which cross the slider above its upper surface can be arranged in a manner that they will be partly interrupted by containers or covers getting in contact with the upper surface of the slider with their light interrupting contact point 116. Thus, it will be possible to distinguish by the respective interruptions of the light beams whether a container or cover is correctly orientated onto the slider's upper surface.

None of the prior art documents discloses a system comprising a plurality of detector elements which are arranged in a pattern allowing to detect the kind or type of a container. US 2021/112584 A1 uses sensor elements for detecting when an object carrier is being conveyed towards a diverting element, or is contacting the diverting element, or is transported away from the diverting element. This document does neither teach or guide a skilled person to the use arranging a plurality of sensors in a pattern for determining the type of container contacting an upper surface of a slider. US 5,567,387 A relates to the use of a sensor for sensing whether the number of cuvettes dispensed onto the conveyer is more than just one, by sensing the presence or absence of a cuvette projecting above the top of the selected cuvette. Again, this document is also silent about arranging a plurality of sensors in a pattern for determining the type of container contacting an upper surface of a slider.

The advantageous of a device according to the present disclosure can be summarised as follows:
- Correct loading is detected before the stack is in the carousel
- This means that it can be easily removed again without any effort
- No incorrectly loaded consumables are unstacked as a result
- Expensive service calls are eliminated

The foregoing description of preferred and other embodiments is not intended to limit or restrict the scope or applicability of the inventive concepts conceived of by the Applicants. It will be appreciated with the benefit of the present disclosure that features described above in accordance with any embodiment or aspect of the disclosed subject matter can be utilized, either alone or in combination, with any other described feature, in any other embodiment or aspect of the disclosed subject matter.

### Reference Numerals

- 1: first detector
- 2: second detector
- 3: third detector
- 4: fourth detector
- 5: slider
- 6: contact point
- 7: upper surface slider
- 9: detector field
- 10: cuvettes
- 11: stack of cuvettes
- 13: snap-feature
- 15: miniplates
- 16: stack of miniplates
- 18: cover
- 19: stack of cover
- 20: tunnel
- 22: surrounding collar
- 30: carousel
- 31: recess
- 40: operating lever
- 100: light source
- 105: optical fibre
- 110: detector
- 116: interrupting contact point

## Claims

1. A slider for loading identical types of containers in an intended orientation as a stack of containers, wherein the slider separates a loading area from a processing area, and wherein the slider comprises on its upper surface a detector comprising a plurality of detector elements, wherein the plurality of detector elements comprises groups of detector elements configured for detecting different patterns of contact points of a container with the upper surface of the slider allowing to identify the kind of container contacting the upper surface of the slider.

2. The slider of claim 1, wherein the plurality of detector elements comprises capacitive electrodes.

3. The slider of any one of claims 1 or 2, wherein the slider is movably arranged between the loading aera and the processing area.

4. A device for loading identical types of containers in an intended orientation as a stack of containers, comprising
- a loading area for receiving the stack of containers;
- a receiver which is arranged below the loading area for receiving the stack of containers;
- a slider which is arranged between the loading area for receiving the stack of container and a processing area, wherein the slider comprises on its upper surface a detector comprising a plurality of detector elements.

5. The device of claim 4, wherein the plurality of detector elements comprises groups of detector elements for detecting different patterns of contact points of a container with the upper surface of the slider.

6. The device of claim 4 or 5, wherein the plurality of detector elements comprises capacitive electrodes.

7. The device of any one of claims 4 to 6, wherein the slider is movably arranged between loading area and processing area.

8. The device of any one of claims 4 to 7, wherein the loading area is open at both ends.

9. A system for loading identical types of containers in an intended orientation as a stack of containers, comprising
- a device according to any one of claims 4 to 8;
- different types of containers configured for fitting in the loading area of the device, wherein each container type is configured to have different contact pints with the upper surface of the slider depending on its orientation of loading into the compartment.

10. The system of claim 9, wherein the types of containers are selected from the group comprising cuvettes, miniplates and covers for cuvettes and miniplates.

11. The system of claim 9 or 10, wherein all types of containers are identically formed on their upper side so that they have identical contact points with the upper surface of the slider when loaded upside down.

12. A method for detecting the type and orientation of a container which is to be dispensed, comprising the steps of:
- loading the container into a loading area;
- arranging the loading area above an upper surface of a slider which is arranged above a processing area;
- detecting contact points of the container with the upper surface of the slider with a detector comprising a plurality of detector elements on the upper surface of the slider.
- detecting the type and orientation of the container by identifying a pattern of contact points of the container with the upper surface of the slider.

13. The method of claim 12, wherein capacitive electrodes are used as detector elements for detecting the pattern of contact points.

14. The method of claim 12 or 13, wherein the plurality of detector elements comprises groups of detectors, wherein each group of detector elements detects a specific pattern of contact points of a container with the slider.

15. The method of any one of claims 12 to 14, wherein a group of detector elements comprises a single detector element or a plurality of detector elements.
